# EUROPÄISCHE PATENTSCHRIFT

(11) **EP 0 739 509 B1**
(45) Veröffentlichungstag und Bekanntmachung des Hinweises auf die Patenterteilung: **26.02.1997**
(21) Anmeldenummer: 95920763.0
(22) Anmeldetag: 06.06.1995
(51) Int. Cl.: G06F 1/00, G06F 13/42

(54) **ANORDNUNG MIT MASTER- UND SLAVE-EINHEITEN**
ARRANGEMENT WITH MASTER AND SLAVE UNITS
CONFIGURATION A UNITES MAITRE-ESCLAVE

(30) Priorität: 17.11.1994 DE 4440789; 09.02.1995 DE 19504136
(43) Veröffentlichungstag der Anmeldung: 30.10.1996
(73) Patentinhaber: SIEMENS AKTIENGESELLSCHAFT, 80333 München (DE)
(72) Erfinder: ABERT, Michael, D-76474 Au (DE); KÜHLERS, Jürgen, D-76461 Muggensturm (DE); RENSCHLER, Albert, D-76275 Ettlingen (DE)
(86) Internationale Anmeldenummer: DE9500739
(87) Internationale Veröffentlichungsnummer: WO9616366

(56) Entgegenhaltungen:
- GB-A- 2 181 281
- US-A- 4 969 085

## Beschreibung

Die Erfindung betrifft eine Slave-Einheit gemäß dem Oberbegriff des Anspruchs 1.

Aus dem Siemens-Katalog ST 54.1, SIMATIC S5, Automatisierungsgeräte, Ausgabe 1994, ist eine Anordnung mit einer derartigen Slave-Einheit bekannt. In einem Baugruppenträger eines hochverfügbaren Automatisierungsgerätes sind mehrere Master-Einheiten in Form von Zentralbaugruppen über einen parallel ausgeführten Rückwandbus mit mehreren als Digital-Ein/Ausgabe-, Analog-Ein/Ausgabe-, Signalvorverarbeitungs- oder als Kommunikationsbaugruppen ausgebildeten Slave-Einheiten verbunden.
Die Master-Einheiten greifen lesend oder schreibend auf die Slave-Einheiten zu, und es werden unterschiedliche Arten von Daten, z. B. Prozeß-, Parametrier- oder Diagnosedaten, zwischen den Master- und Slave-Einheiten ausgetauscht. Dazu weisen die Slave-Einheiten gewöhnlich einen Speicher auf, in welchem die Daten in dafür vorgesehenen Bereichen hinterlegt sind, auf welche die Master-Einheiten mit entsprechenden Adressen zugreifen. Um einen störungsfreien Zugriff auf diese Daten zu ermöglichen, müssen die Master-Einheiten sowohl die Größe des Speichers und dessen Aufteilung in die verschiedenen Bereiche als auch die Art und Anordnung der unterschiedlichen Datenarten innerhalb dieser Bereiche kennen. Versucht z. B. eine Master-Einheit, auf Diagnosedaten einer Slave-Einheit zuzugreifen, welche über keine Diagnosefunktionalität verfügt und welche daher mit keinen Diagnosedaten versehen ist, so dürfen insbesondere in Automatisierungsgeräten keine Störungen, z. B. in Form einer verlängerten Busbelegung, auftreten. Um solche Störungen zu vermeiden, kann man alle am Bus angeschlossenen Slave-Einheiten mit Speichern gleicher Größe versehen und die Aufteilung der Bereiche sowie die Art und Anordnung der Daten einheitlich gestalten. Das bedeutet allerdings, den jeweiligen Speicher der Slave-Einheiten sowohl an den größten Speicher als auch an den größten Speicherbereich der Anordnung anzupassen. Dadurch sind einige Slave-Speicher überdimensioniert, und die Größe der Speicherbereiche kann nicht variiert werden.

In der deutschen Patentanmeldung P 44 40 789.0 ist eine Anordnung mit mindestens einer Master-Einheit vorgeschlagen, welche über einen Bus mit Slave-Einheiten verbunden ist, die jeweils einen Speicher aufweisen, auf welchen die Master-Einheit Lese- und/oder Schreibzugriffe ausführt. Die Slave-Einheiten weisen jeweils einen Protokollbereich auf, über welchen die Master-Einheit der Slave-Einheit einen bevorstehenden Speicherzugriff anzeigt, wobei die jeweilige Slave-Einheit der Master-Einheit über diesen Protokollbereich eine Zugriffsberechtigung erteilt oder verweigert, wobei die Slave-Einheit im Falle einer Zugriffsberechtigung der Master-Einheit einen Adreßbereich des Speichers zuweist, dessen Lage die Master-Einheit aus dem Protokollbereich ausliest. Der Adreßbereich des Slave-Speichers ist damit abhängig vom Busadreßbereich.

Aus der englischen Patentanmeldung GB 2 181 281 ist eine Anordnung mit einer CPU-Einheit und peripheren Einheiten bekannt. Zugriffe der CPU-Einheit auf die peripheren Einheiten erfolgen über ein Zugriffskontrollmodul, welches über eine Zugriffsberechtigung entscheidet.

Aus der US-Patentschrift 4 969 085 ist eine Anordnung mit einem Prozessor und mehreren Informationseinheiten bekannt, wobei eine Speicherverwaltung dem Prozessor die Zugriffsbereitschaft einer Gruppe von Informationseinheiten anzeigt.

Der vorliegenden Erfindung liegt die Aufgabe zugrunde, eine Slave-Einheit der eingangs genannten Art zu schaffen, welche für eine Kommunikation mit einer Master-Einheit nach einem vorgegebenen Kommunikationsprotokoll geeignet ist.

Diese Aufgabe durch die im kennzeichnenden Teil der Ansprüche 1 und 8 angegebenen Maßnahmen gelöst.

Alle an dem Bus angeschlossenen Slave-Einheiten sind mit dem Protokollbereich versehen, auf welchen die Master-Einheit einheitlich lesend oder schreibend zugreift. Die beabsichtigte Kommunikation mit einer Slave-Einheit zeigt die Master-Einheit der Slave-Einheit in einer Auftragszelle des Protokollbereichs an, und die Slave-Einheit quittiert durch einen Eintrag in eine Antwortzelle dieses Protokollbereichs. Auftrags- und Antwortzelle der an der Kommunikation teilnehmenden Slave-Einheiten adressiert die Master-Einheit stets unter gleichen Adressen. Für den Fall, daß die Slave-Einheit eine Zugriffsberechtigung erteilt, trägt die Slave-Einheit in die Antwortzelle die Transferadresse ein, unter welcher die Master-Einheit auf einen Datensatz oder mehrere Datensätze zugreift. Das Ende einer Datenübertragung zeigt die Master-Einheit der Slave-Einheit durch einen entsprechenden Eintrag in der Auftragszelle an, den wiederum die Slave-Einheit mit einem Eintrag in die Antwortzelle quittiert.
Alle Datensatzzugriffe der Master-Einheit erfolgen unter derselben Transferadresse, deren Bitbreite vorzugsweise der des Busses entspricht. Die Slave-Einheit weist den Datensätzen Adressen zur Hinterlegung im Speicher zu, welche von der Transferadresse verschieden sind. Der Adreßbereich des Slave-Speichers ist damit unabhängig vom Busadreßbereich, die Größe des Speichers kann den Erfordernissen der Slave-Einheit angepaßt werden.
Die Slave-Einheit selbst verwaltet ihren Speicher, die Master-Einheit kennt weder Speichergröße noch die Aufteilung des Speichers in verschiedene Bereiche, wodurch ein "Katalogwissen" der Master-Einheit über die Speicher der Slave-Einheiten nicht erforderlich ist und Laufzeiten verkürzt werden. Größe und Aufteilung dieses Speichers richten sich ausschließlich nach der Funktionalität der verschiedenen Slave-Einheiten. Dadurch werden insbesondere bei den Slave-Einheiten Speicherbausteine eingespart, welche z. B. lediglich mit Diagnosedaten versehen sind oder welche überhaupt keine Datensätze verarbeiten können und die daher keinen Speicher für Prozeß-, Parametrier- und Diagnosedaten aufweisen.
Die einzuschreibenden bzw. auszulesenden Datensätze sind jeweils mit einer Datensatznummer versehen, und bei einem Schreibzugriff trägt die Master-Einheit die Länge eines einzuschreibenden Datensatzes in die Auftragszelle und bei einem Lesezugriff die Slave-Einheit die Länge eines auszulesenden Datensatzes in die Antwortzelle ein. Durch diese Längenangaben werden unterschiedliche Datensätze, z. B. 8-, 16- oder 32-Byte-Datensätze, unterstützt, und Slave-Einheiten können ohne Rückwirkungen auf die Anordnung um neue Funktionen erweitert werden, welche eine Vergrößerung des Speichers und der Datensätze erfordern.
Damit Slave-Einheiten, die überhaupt keinen Speicher für solche Datensätze aufweisen, an dem Kommunikationsprotokoll teilnehmen können, wird der Master-Einheit durch eine festeingestellte Kennung in der Antwortzelle ein Zugriff auf Datensätze stets verweigert. Auf derartige Slave-Einheiten, z. B. Slave-Einheiten in Form von Digital-Ein/Ausgabeeinheiten, greift die Master-Einheit gewöhnlich mit einer Steckplatzadresse und einer Kennung für den anzusprechenden Ein- bzw. Ausgang zu.
Die Anordnung ist um weitere Slave-Einheiten mit unterschiedlichen Funktionen erweiterbar, vorausgesetzt, die Slave-Einheiten stellen diesen erforderlichen Protokollbereich bereit, über welchen die Master-Einheit eine Kommunikation mit den Slave-Einheiten einleiten kann.
Die Anordnung kann mehrere Master-Einheiten umfassen, die jeweils mit einer Kennung versehen sind. Eine einen Schreib- oder Lesezugriff ausführende Master-Einheit trägt ihre Kennung in die Auftragszelle ein, wobei jede Master-Einheit auf eine Slave-Einheit unter einer ihr zugeordneten Transferadresse zugreift.
Bestandteile des Kommunikationsprotokolls sind ein Starttelegramm und ein Endetelegramm, von denen das Starttelegramm den Eintrag der Kennung für den Beginn eines Datensatzzugriffs und das Endetelegramm den Eintrag der Kennung für das Ende eines Datensatzzugriffs umfaßt. Ein Starttelegramm unterbricht einen aktuellen Datensatzzugriff. Dabei werden die Datensatznummer und der Speicheradreßbereich der noch zu übertragenden Daten des Datensatzes in einem Protokollspeicher der Slave-Einheit hinterlegt. Der Protokollspeicher der Slave-Einheiten ist in Bereiche unterteilt, wobei jeder Master-Einheit ein Bereich zugeordnet ist. Dadurch ist sowohl für die jeweilige Master-Einheit als auch für die Slave-Einheit die richtige Zuordnung zwischen Auftrag und Antwort gewährleistet, und die Slave-Einheiten können gezielt mit den einzelnen Master-Einheiten kommunizieren.

Weitere Ausgestaltungen der Erfindung ergeben sich aus den weiteren Unteransprüchen.

Die Erfindung wird insbesondere in Automatisierungsgeräten eingesetzt.

Anhand der Zeichnung, in der ein Ausführungsbeispiel der Erfindung veranschaulicht ist, werden die Erfindung sowie deren Ausgestaltungen und Vorteile näher erläutert.

Es zeigen:
- Figur 1: einen Protokollbereich einer Slave-Einheit,
- Figuren 2 bis 4: Funktionsdarstellungen einer Slave-Einheit-Speicherverwaltung und
- Figur 5: das Blockschaltbild einer Auswerteschaltung einer Slave-Einheit.

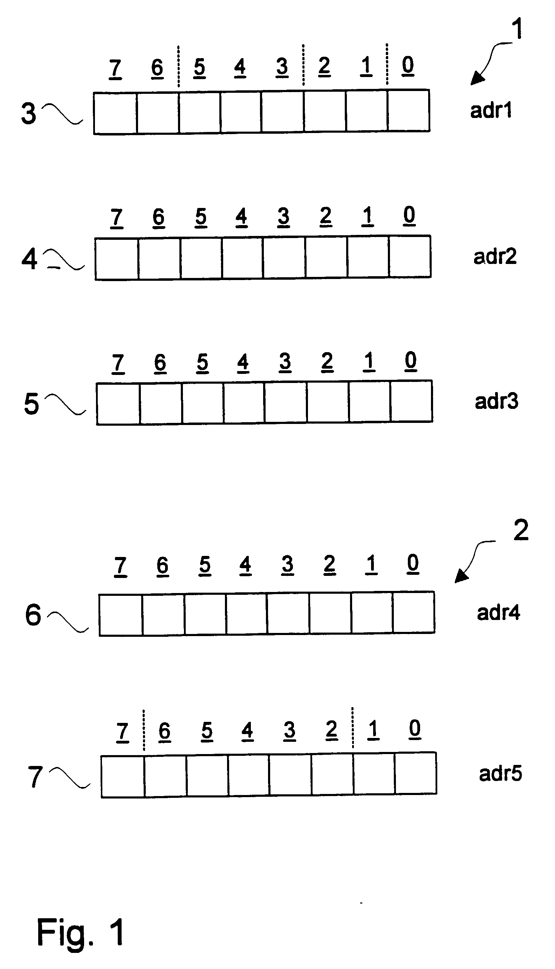

In Figur 1 ist ein Protokollbereich einer Slave-Baugruppe dargestellt, welche eine Auftragszelle 1 und eine Antwortzelle 2 umfaßt, von denen die Auftragszelle 1 aus drei Registern 3, 4, 5 und die Antwortzelle 2 aus zwei Registern 6, 7 besteht. Die Register 3 ... 7 sind mit Adressen ad1 ... ad5 adressierbar, wobei eine Master-Einheit auf die Register 3, 4, 5 schreibend, auf die Register 6, 7 lesend und die Slave-Einheit auf die Register 6, 7 schreibend und auf die Register 3, 4, 5 lesend zugreift. Um einen Speicherzugriff einzuleiten, trägt die Master-Einheit zunächst in das Register 3 mehrere Kennungen ein, und zwar in die Zelle 0 des Registers 3 eine Kennung für den bevorstehenden Schreib- oder Lesezugriff, in die Zellen 1 und 2 eine Kennung für den Beginn des Zugriffs und in die Zellen 6 und 7 eine Kennung für die zugreifende Master-Einheit. Die Zellen 3 ... 5 werden nicht beschrieben, sondern sind für mögliche Funktionserweiterungen reserviert. In das Register 4 hinterlegt die Master-Einheit die Nummer eines Datensatzes, welcher in den Speicher der Slave-Einheit einzutragen oder aus diesem auszulesen ist. Für den Fall eines Schreibzugriffs hinterlegt die Master-Einheit in das Register 5 eine Kennung für die Länge des einzuschreibenden Datensatzes. Für den Fall eines Lesezugriffs hinterlegt dagegen die Slave-Einheit in das Register 6 die Kennung für die Länge des auszulesenden Datensatzes. Das bedeutet, daß bei einem Schreibzugriff die Master-Einheit die Register 3, 4, 5 der Auftragszelle beschreibt, welche die Slave-Einheit ausliest, und daß die Slave-Einheit lediglich das Register 7 beschreibt, das die Master-Einheit ausliest. Bei einem einzuleitenden Lesezugriff dagegen beschreibt die Master-Einheit lediglich die Register 3, 4 und die Slave-Einheit zusätzlich zum Register 7 das Register 6 der Antwortzelle. Ob die Master-Einheit berechtigt ist, einen Lesezugriff auf den mit der Datensatznummer gekennzeichneten Datensatz auszuführen oder diesen Datensatz in den Speicher der Slave-Einheit einzutragen, zeigt die Slave-Einheit der Master-Einheit durch einen entsprechenden Eintrag in die Zellen 0 und 1 des Registers 7 an. Dabei kann die Slave-Einheit anzeigen, daß diese Master-Einheit auf den angegebenen Datensatz temporär nicht zugreifen kann, weil die Slave-Einheit den Datensatz gerade bearbeitet, daß die Master-Einheit auf den Datensatz überhaupt nicht zugreifen kann, z. B. weil die Slave-Einheit den angeforderten Datensatz überhaupt nicht kennt, oder daß die Master-Einheit auf den angeforderten Datensatz zugreifen kann, wobei in diesem Fall die Slave-Einheit der Master-Einheit eine Transferadresse, unter welcher die Master-Einheit auf Datensätze zugreift, in den Zellen 2 ... 6 des Registers 7 anzeigt. Die Zelle 7 des Registers 7 ist nicht belegt und kann ebenfalls für eventuelle Funktionserweiterungen berücksichtigt werden.
Nach den Einträgen in die Register 3 ... 7 greift im Falle einer vorliegenden Zugriffsberechtigung die Master-Einheit auf die im Speicher der Slave-Einheit hinterlegten Daten unter der angegebenen Transferadresse zu, d. h., die Datenübertragung zwischen der Slave- und der Master-Einheit erfolgt unter dieser Adresse. Das Ende des Zugriffs zeigt die Master-Einheit der Slave-Einheit durch einen erneuten Eintrag einer entsprechenden Kennung in die Zellen 1 und 2 des Registers 3 an. Die Slave-Einheit quittiert das Zugriffsende, indem sie die dafür vorgesehene Kennung in die Zellen 0 und 1 des Registers 7 einschreibt.

In einem praktischen Ausführungsbeispiel der Erfindung sind für die Register 3 ... 7 folgende Kennungen vorgesehen:

Zelle 6 und 7 des Registers 3:
00 = Master-Einheit 1
01 = Master-Einheit 2
10 = Master-Einheit 3
11 = Master-Einheit 4

Zelle 1 und 2 des Registers 3:
00 = reserviert
01 = Beginn des Zugriffs
10 = Ende des Zugriffs
11 = Abbruch/Reset

Zelle 0 des Registers 3:
0 = Schreiben
1 = Lesen

Nummer des Datensatzes in Register 4:
0 ... 255

Länge (in Byte) des Datensatzes in Register 5 und 6:
0 ... 255

Zelle 0 und 1 in Register 7:
00 = reserviert
01 = Quittung negativ (temporär)
10 = Quittung positiv
11 = Quittung negativ (generell, d. h. Slave-Einheit kennt die Nummer des Datensatzes nicht)

Zelle 2 ... 6 in Register 7:
12 = Transferadresse 176
13 = Transferadresse 180
14 = Transferadresse 184
15 = Transferadresse 188
16 = Transferadresse 192
17 = Transferadresse 196
18 = Transferadresse 200
19 = Transferadresse 204
20 = Transferadresse 208
21 = Transferadresse 212
   .
   .
   .

Zelle 3 ... 5 des Registers 3 und Zelle 7 des Registers 7 sind reserviert.

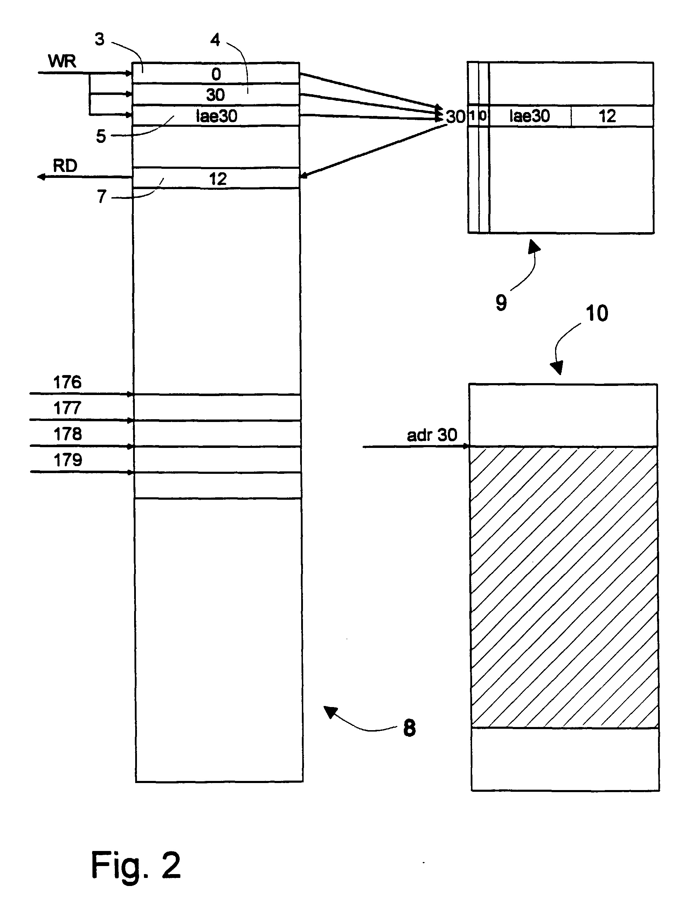

In Figur 2 ist ein Speicher 10 einer Slave-Einheit dargestellt, in welche ein Anwender Parameterdaten zur Parametrierung der Slave-Einheit einzutragen hat. Die in den Figuren 1 und 2 vorkommenden gleichen Teile sind mit gleichen Bezugszeichen versehen, wobei im vorliegenden Beispiel der Protokollbereich Bestandteil eines Protokollspeichers 8 ist. Zur Parametrierung ist es erforderlich, daß der Anwender entsprechend einer für diese Einheit vorgesehenen Parametriervorschrift die Parameter in einen Datensatz mit der Datensatznummer 30 hinterlegt. Die Master-Einheit aktiviert ein Schreibsignal WR zum Schreiben in den Protokollspeicher 8 und schreibt in das Register 3 der Auftragszelle die Kennung 0 (Zelle 0, Figur 1) für einen beabsichtigten Schreibzugriff und die Kennung 01 (nicht dargestellt) für den Beginn des Schreibzugriffs (Zelle 1 und 2, Figur 1), in das Register 4 die Nummer 30 des Parametrierdatensatzes und in das Register 5 die Länge lae30 dieses Datensatzes ein. Die Slave-Einheit liest zunächst den Inhalt der Register 3, 4 aus und erkennt anhand der in der Slave-Einheit hinterlegten Tabelle 9, daß eine Berechtigung (Kennung 10) für einen Schreibzugriff zum Einschreiben des Parametrierdatensatzes Nummer 30 vorliegt. Anschließend überträgt die Slave-Einheit die Länge lae30 des Datensatzes in die Tabelle, ordnet diesem Datensatz eine Kennung 12 für die Transferadressen 176, 177, 178 und 179 zu und schreibt diese Kennung 12 in das Register 7 (Zelle 2 ... 6, Figur 1). Die Master-Einheit aktiviert nun ein Lesesignal RD zum Auslesen des Inhalts des Registers 7 und schreibt in einem nächsten Schritt in den Protokollspeicher 8 unter den Transferadressen 176 ... 179 den Parametrierdatensatz der Länge lae30 ein. Die Slave-Einheit weist diesem Datensatz eine Adresse adr30 zu und hinterlegt den Datensatz in ihrem Speicher 10 unter dieser Adresse. Selbstverständlich kann es erforderlich sein, daß die Master-Einheit den Protokollbereich der Transferadressen 176 ... 179 mehrfach beschreiben und die Slave-Einheit diesen Bereich mehrfach auslesen muß. Dies ist z. B. dann der Fall, wenn die Datensatzlänge größer als 4 Byte ist und die Breite des Protokollspeichers lediglich 8 Bit beträgt, was bedeutet, daß die Master-Einheit lediglich 4 Byte während eines Datensatzzugriffs auslesen kann. Nachdem die Master-Einheit den Datensatz mit der Datensatznummer 30 der Slave-Einheit über die Transferadressen 176 ... 179 vollständig übertragen hat, zeigt die Master-Einheit der Slave-Einheit das Ende des Schreibzugriffs an (nicht dargestellt). Dazu aktiviert die Master-Einheit wiederum das Schreibsignal und trägt in das Register 3 die Kennung 10 für das Ende des Zugriffs ein. Die Slave-Einheit liest das Register 3 aus und quittiert durch Eintrag der Kennung 11 (positive Quittung) in das Register 7 der Antwortzelle. Der Schreibzugriff ist somit beendet.

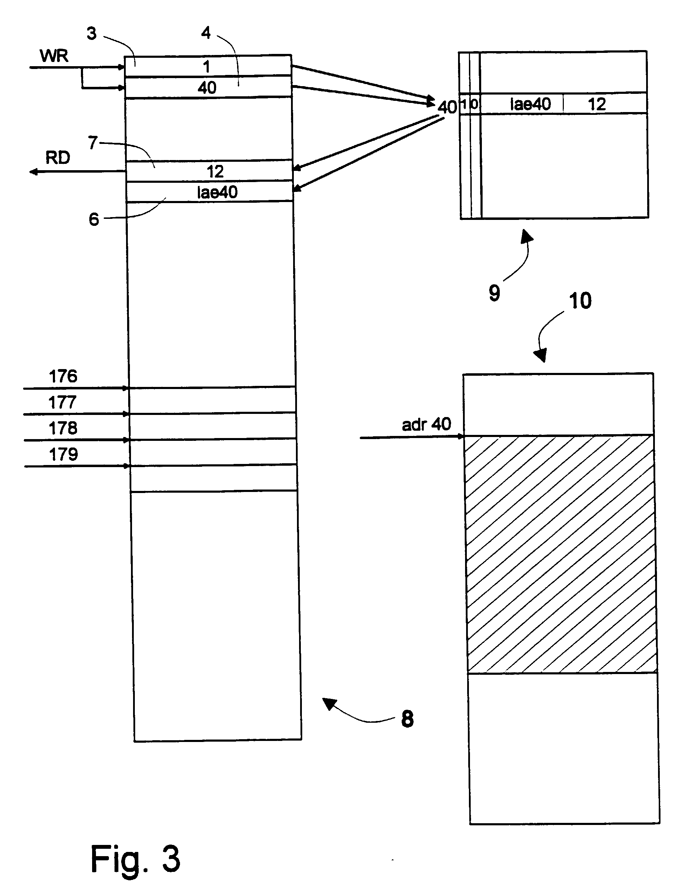

In Figur 3 ist ein Lesezugriff auf den Speicher 10 der Slave-Einheit veranschaulicht. Dabei wird angenommen, daß ein Datensatz mit der Nummer 40 auszulesen ist. Die Master-Einheit aktiviert zunächst das Schreibsignal WR und trägt in das Register 3 die Kennung 1 ein für einen beabsichtigten Lesezugriff, die Kennung 01 (nicht dargestellt) für den Zugriffsbeginn sowie in das Register 4 die Nummer 40 des auszulesenden Datensatzes. Die Slave-Einheit liest die Register 3 und 4 aus, und da eine Berechtigung für einen Lesezugriff auf den Datensatz Nummer 40 vorliegt (Kennung 10 in Tabelle 9), trägt die Slave-Einheit die Länge des Datensatzes lae40 sowie die Kennung 12 für die Transferadressen 176, 177, 178 und 179 aus der Tabelle 9 aus und in die Register 6 und 7 der Antwortzelle 2 ein. Den Inhalt der Register 6 und 7 liest die Master-Einheit nach Aktivierung des Lesesignals RD aus und greift auf den Inhalt (Datensatz Nummer 40) des Protokollspeichers unter den Transferadressen 176 ... 179 zu, welchen die Slave-Einheit aus dem Speicher 10 unter der Adresse adr40 ausgelesen und unter diesen Transferadressen in den Protokollspeicher eingetragen hat. Auch für den Lesezugriff kann es erforderlich sein, daß die Slave-Einheit den Protokollbereich mit den Transferadressen 176 ... 179 in Abhängigkeit von der Länge des auszulesenden Datensatzes und der Breite des Protokollspeichers mehrfach beschreiben und die Master-Einheit diesen Bereich mehrfach auslesen muß, um den Datensatz vollständig auszulesen. Das Ende des Lesezugriffs zeigt die Master-Einheit wiederum im Register 3 der Slave-Einheit an, welche die Anzeige im Register 7 quittiert.

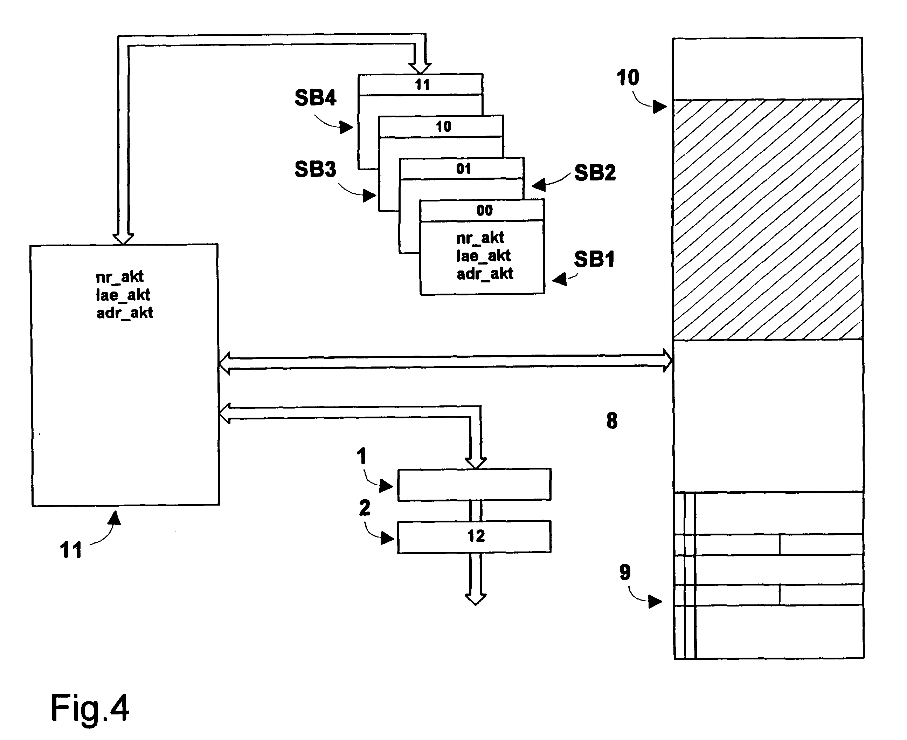

In Figur 4 ist der Protokollspeicher 8 mit vier Stapelbereichen SB1 ... SB4 versehen, die jeweils einer von vier Master-Einheiten mit den Kennungen 00, 01, 10 und 11 (Figur 1) zugeordnet sind. Es bedeutet keine Beschränkung der Allgemeinheit, daß der Protokollbereich 1, 2 und der Protokollspeicher 8 sowie die Steuertabelle 9 und der Slave-Speicher 10 getrennt dargestellt sind. Es ist selbstverständlich auch eine Aufteilung der Bereiche gemäß den Figuren 2 und 3 oder eine andere geeignete denkbar.
Es ist zunächst angenommen, daß - wie bereits beschrieben - die Master-Einheit 1 (Kennung 00) mit einem ersten Starttelegramm, welches den Eintrag der Kennung für den Beginn eines Zugriffs und die Kennung 00 für die zugreifende Master-Einheit umfaßt, den Zugriff auf einen Datensatz einleitet. Eine Protokollsteuerung 11 der Slave-Einheit liest das Starttelegramm aus der Auftragszelle 1 aus, überprüft die Zugriffsberechtigung und schreibt im Falle einer erteilten Zugriffsberechtigung in die Antwortzelle 2 die Kennung 12 für Transferadressen 176 ... 179, welche dieser Master-Einheit 1 zugeordnet ist. Die Master-Einheit 1 greift auf die unter diesen Transferadressen adressierbaren Register der Slave-Einheit zu, in welche die Slave-Einheit die angeforderten Daten einschreibt bzw. ausliest. Es kann nun vorkommen, daß aufgrund von Vorgaben eines durch die Master-Einheit 1 abzuarbeitenden Steuerprogramms dieser Datensatzzugriff unterbrochen werden und die Master-Einheit 1 auf einen anderen Datensatz zugreifen muß. Die Master-Einheit 1 schreibt dazu ein zweites Starttelegramm in die Auftragszelle 1 ein, was bewirkt, daß die Protokollsteuerung 11 zunächst die aktuelle Datensatznummer nr_akt des Datensatzes, dessen Übertragung unterbrochen wurde, die noch zu übertragende Datensatzlänge lae_akt dieses Datensatzes und die aktuelle Speicheradresse adr_akt, unter welcher die noch nicht übertragenen Daten im Slave-Speicher 10 hinterlegt sind, in den Stapelspeicher SB1 einträgt. Nach dieser Datensicherung bearbeitet die Slave-Einheit den durch das zweite Starttelegramm eingeleiteten Datentransfer. Falls dieser Datentransfer abgeschlossen ist, was die Master-Einheit 1 der Slave-Einheit durch ein Endetelegramm anzeigt, wird die Datenübertragung des unterbrochenen Datentransfers wieder aufgenommen. Dazu ist es zunächst erforderlich, daß die Protokollsteuerung 11 zunächst die im Stapelbereich SB1 hinterlegten Informationen (die Datensatznummer nr_akt, Datensatzlänge lae_akt, Speicheradresse adr_akt) einliest, um die Datenübertragung fortzusetzen. Das Ende der Übertragung zeigt die Master-Einheit 1 der Slave-Einheit wiederum durch ein diesem Datensatz zugeordnetes Endetelegramm an.

Im folgenden wird die Bearbeitung von Protokollen mehrerer Master-Einheiten durch die Slave-Einheit betrachtet. Dabei ist angenommen, daß die Master-Einheit 2 ein Starttelegramm in die Auftragszelle 1 für einen Schreibzugriff auf einen Datensatz einträgt, auf welchen gerade die Master-Einheit 1 schreibend zugreift (verschachtelte Schreibzugriffe). In diesem Fall quittiert die Slave-Einheit den Zugriff dieser Master-Einheit 2 in der Antwortzelle 2 temporär negativ (Kennung 01, Figur 1). Verschachtelte Lesezugriffe, d. h. Lesezugriffe mehrerer Master-Einheiten auf den gleichen Datensatz, sind möglich, wobei aus Gründen der Performance die "Verschachtelungstiefe" nicht zu hoch gewählt werden sollte. Jeder Master-Einheit ist eine eigene Transferadresse zugeordnet, unter welcher die jeweilige Master-Einheit auf Datensätze zugreift. Um simultane, verschachtelte Schreib- und Lesezugriffe auf einen Datensatz zu ermöglichen, ist der Slave-Speicher 10 in einen Schreib- und einen Lesebereich unterteilt. Einen durch einen Schreibzugriff modifizierten Datensatz hinterlegt die Slave-Einheit nach dieser Modifikation in den Lesebereich, wobei jeweils die gleiche Datensatznummer diesen Datensätzen zugeordnet ist.

Um ein deterministisches Verhalten zu erreichen, müssen alle Slave-Einheiten Zugriffe der Master-Einheit innerhalb einer bestimmten Zeit quittieren. Für den Fall, daß mehrere Master-Einheiten auf einen Datensatz zugreifen wollen, ist es erforderlich, daß die Slave-Einheit der zuerst zugreifenden Master-Einheit den beabsichtigten Zugriff positiv quittiert, allen weiteren Master-Einheiten dagegen den Zugriffsversuch vorübergehend negativ quittiert.

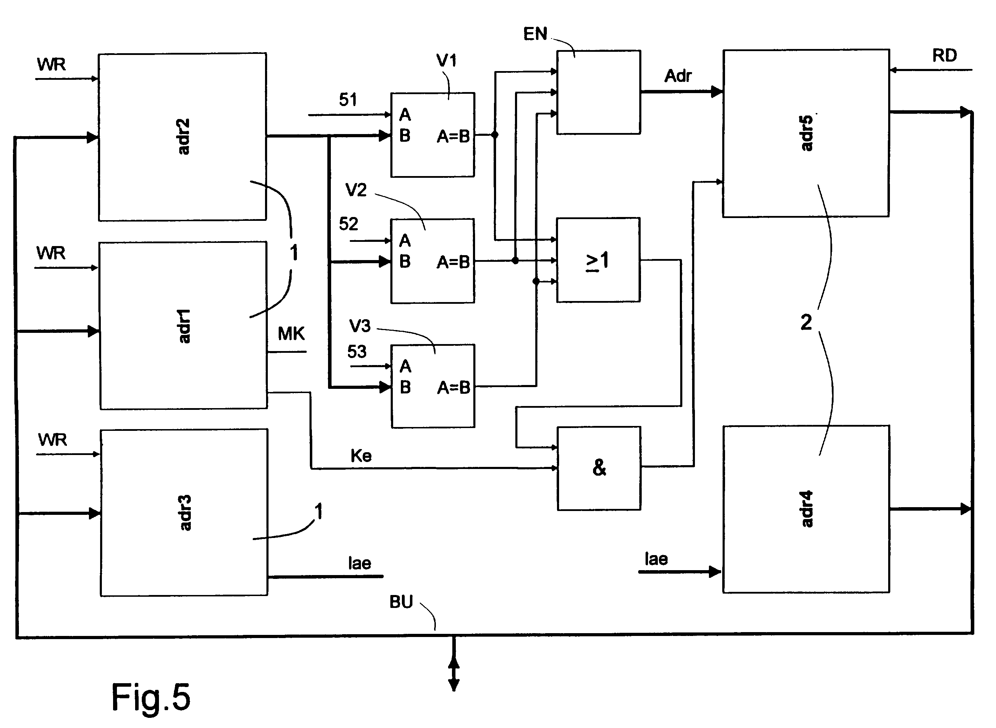

Figur 5 zeigt das Blockschaltbild einer einfachen Auswerteschaltung einer Slave-Einheit, welche geeignet ist, drei unterschiedliche Datensätze, welche mit Datensatznummern 51, 52, 53 versehen sind, auszuwerten. Es wird im folgenden ein Schreibzugriff betrachtet. Über einen Bus BU werden während des aktiven Schreibsignals WR der Auftragszelle 1 die entsprechenden Kennungen zugeführt, welche auszuwerten sind. Im vorliegenden Beispiel werden allerdings eine Kennung MK der zugreifenden Master-Einheit und die Datensatzlänge lae nicht ausgewertet. Datensätze werden Vergleichern V1, V2, V3 aufgeschaltet, welche prüfen, ob die Master-Einheit berechtigt ist, auf die Datensätze 51, 52, 53 zuzugreifen. Die Kennungen Ke für den Beginn des Auftrags, das Auftragsende oder Abbruch des Auftrages werden mit diskreter Logik geprüft. Ein Encoder EN ordnet den Datensätzen eine Transferadresse Adr zu, und für den Fall, daß ein Zugriff auf einen der Datensätze 51, 52, 53 und die Kennung Ke zulässig ist, wird eine positive Quittung im Antwortregister 2 hinterlegt. Die Antwortzelle 2 wird bei dem aktiven Lesesignal RD durch die Master-Einheit ausgelesen, und über die ausgelesene Transferadresse Adr werden die Datensätze 51, 52, 53 zwischen der Master-Einheit und der Slave-Einheit übertragen. Ein Erkennen und gegenseitiges Verriegeln von Mehrfachaufträgen ist mit der dargestellten einfachen Auswerteschaltung nicht möglich.

## Patentansprüche

1. Slave-Einheit, welche über einen Bus mit mindestens einer Master-Einheit verbindbar ist und einen Speicher aufweist, auf dessen Datensätze die Master-Einheit lesend und/oder schreibend zugreift,
dadurch gekennzeichnet,
- daß die Slave-Einheit einen für ein Kommunikationsprotokoll beschreibbaren Protokollbereich (1, 2) aufweist, über welchen die Master-Einheit der Slave-Einheit einen bevorstehenden Speicherzugriff anzeigt und welcher zur Erteilung oder Verweigerung einer Zugriffsberechtigung der Master-Einheit vorgesehen ist, und
- daß die Slave-Einheit im Falle einer Zugriffsberechtigung der Master-Einheit mindestens eine Transferadresse zuweist, welche die Master-Einheit aus dem Protokollbereich (1, 2) ausliest und unter welcher die Master-Einheit auf Datensätze zugreift.

2. Slave-Einheit nach Anspruch 1, dadurch gekennzeichnet, daß die Slave-Einheit den Datensätzen Adressen zur Hinterlegung in ihrem Speicher zuweist.

3. Slave-Einheit nach Anspruch 1 oder 2, dadurch gekennzeichnet, daß für jeden Datenzugriff der Master-Einheit dieselbe Transferadresse vorgesehen ist.

4. Slave-Einheit nach einem der Ansprüche 1 bis 3, dadurch gekennzeichnet, daß der Protokollbereich eine Auftragszelle (1) und eine Antwortzelle (2) umfaßt, von denen die Master-Einheit die Auftragszelle (1) mit einer Schreib- oder Lesekennung, mit einer Kennung für den Beginn und/oder das Ende eines Zugriffs und für den Fall eines Schreibzugriffs mit einer Längenkennung (lae30) eines einzuschreibenden Datensatzes und die Slave-Einheit die Antwortzelle (2) mit einer Kennung für die Zugriffsberechtigung, mit der Transferadresse und für den Fall eines Lesezugriffs mit einer Längenkennung (lae40) eines auszulesenden Datensatzes beschreibt.

5. Slave-Einheit nach einem der Ansprüche 1 bis 4, dadurch gekennzeichnet, daß die Datensätze mit Datensatznummern (30, 40) versehen sind, welche die Master-Einheit in die Auftragszelle (1) einträgt.

6. Slave-Einheit nach Anspruch 5, dadurch gekennzeichnet, daß das Kommunikationsprotokoll aus einem Starttelegramm und einem Endetelegramm besteht, wobei das Starttelegramm den Eintrag der Kennung für den Beginn eines Datensatzzugriffs und das Endetelegramm den Eintrag der Kennung für das Ende eines Datensatzzugriffs umfaßt.

7. Slave-Einheit nach Anspruch 6 , dadurch gekennzeichnet,
- daß ein Starttelegramm einen aktuellen Datensatzzugriff unterbricht und
- daß die Slave-Einheit mit einem Protokollspeicher versehen ist, in welchem für den unterbrochenen Datensatzzugriff die Datensatznummer und der Speicheradreßbereich der noch zu übertragenden Daten des Datensatzes hinterlegt sind.

8. Slave-Einheit, welche über einen Bus mit mindestens einer Master-Einheit verbindbar ist, dadurch gekennzeichnet,
- daß die Slave-Einheit einen für ein Kommunikationsprotokoll beschreibbaren Protokollbereich (1, 2) aufweist, über welchen die Master-Einheit der Slave-Einheit einen bevorstehenden Speicherzugriff anzeigt, und
- daß der Protokollbereich (1, 2) eine Antwortzelle (2) umfaßt, die mit einer festen Kennung versehen ist, welche die Master-Einheit ausliest und die bewirkt, daß die Slave-Einheit der Master-Einheit einen Lese- und/oder Schreibzugriff verweigert.

## Claims

1. Slave unit which can be connected by way of a bus to at least one master unit and which has a memory, the data records of which are accessed by the master unit in a reading and/or writing manner,
characterized in that
- the slave unit has a protocol region (1, 2) which can be written for a communication protocol, by way of which protocol region the master unit indicates to the slave unit an imminent memory access and which is provided in order to grant or refuse the master unit access authority, and
- the slave unit in the case of access authority allocates to the master unit at least one transfer address which the master unit reads out from the protocol region (1, 2) and under which the master unit accesses data records.

2. Slave unit according to claim 1, characterized in that the slave unit allocates to the data records addresses for depositing in its memory.

3. Slave unit according to claim 1 or 2, characterized in that for each data access of the master unit the same transfer address is provided.

4. Slave unit according to one of claims 1 to 3, characterized in that the protocol region comprises a request cell (1) and a response cell (2), the master unit writing the request cell (1) with a write or read identifier, with an identifier for the beginning and/or the end of an access and for the case of a write access with a length identifier (lae30) of a data record to be written in, and the slave unit writes the response cell (2) with an identifier for access authority, with the transfer address and for the case of a read access with a length identifier (lae40) of a data record to be read out.

5. Slave unit according to one of claims 1 to 4, characterized in that the data records are provided with data record numbers (30, 40) which the master unit enters into the request cell (1).

6. Slave unit according to claim 5, characterized in that the communication protocol consists of a start telegram and an end telegram, with the start telegram comprising the entry of the identifier for the beginning of a data record access and the end telegram comprising the entry of the identifier for the end of a data record access.

7. Slave unit according to claim 6, characterized in that
- a start telegram interrupts a current data record access, and
- the slave unit is provided with a protocol memory in which, for the interrupted data record access, the data record number and the memory address region of the data of the data record yet to be transmitted are deposited.

8. Slave unit which can be connected by way of a bus to at least one master unit, characterized in that
- the slave unit has a protocol region (1, 2) which can be written for a communication protocol, by way of which region the master unit indicates to the slave unit an imminent memory access, and
- the protocol region (1, 2) comprises a response cell (2) which is provided with a fixed identifier which the master unit reads out and which has the effect that the slave unit refuses the master unit a read and/or write access.

## Revendications

1. Unité esclave, qui peut être reliée par l'intermédiaire d'un bus à au moins une unité maîtresse et qui comporte une mémoire aux ensembles de données de laquelle l'unité maîtresse accède en lecture et/ou en écriture,
caractérisée par le fait que
- l'unité esclave comporte une zone de protocole (1, 2), dans laquelle il peut être écrit pour un protocole de communication, par l'intermédiaire de laquelle l'unité maîtresse indique à l'unité esclave un accès imminent en mémoire et qui est prévue pour l'accord ou le refus à l'unité maîtresse d'une autorisation d'accès, et
- l'unité esclave, dans le cas d'une autorisation d'accès, attribue à l'unité maîtresse au moins une adresse de transfert que l'unité maîtresse lit dans la zone de protocole (1, 2) et avec laquelle l'unité maîtresse accède à des ensembles de données.

2. Unité esclave selon la revendication 1, caractérisée par le fait que l'unité esclave attribue aux ensembles de données des adresses pour la mémorisation dans sa mémoire.

3. Unité esclave selon la revendication 1 ou 2, caractérisée par le fait que la même adresse de transfert est prévue pour chaque accès aux données effectué par l'unité maîtresse.

4. Unité esclave selon l'une des revendications 1 à 3, caractérisée par le fait que la zone de protocole comprend une cellule de tâche (1) et une cellule de réponse (2), l'unité maîtresse écrivant dans la cellule de tâche (1) une caractérisation d'écriture ou de lecture, une caractérisation pour le début et/ou la fin d'un accès et, dans le cas d'un accès en écriture, une caractérisation de longueur (lae30) d'un ensemble de données à écrire et l'unité esclave écrivant dans la cellule de réponse (2) une caractérisation pour l'autorisation d'accès, l'adresse de transfert et, dans le cas d'un accès en lecture, une caractérisation de longueur (lae40) d'un ensemble de données à lire.

5. Unité esclave selon l'une des revendications 1 à 4, caractérisée par le fait que les ensembles de données sont munis de numéros d'ensembles de données (30, 40) que l'unité maîtresse enregistre dans la cellule de tâche (1).

6. Unité esclave selon la revendication 5, caractérisée par le fait que le protocole de communication consiste en un télégramme de début et en un télégramme de fin, le télégramme de début comprenant l'enregistrement de la caractérisation pour le début d'un accès à un ensemble de données et le télégramme de fin comprenant l'enregistrement de la caractérisation pour la fin de l'accès à un ensemble de données.

7. Unité esclave selon la revendication 6, caractérisée par le fait que
- un télégramme de début interrompt un accès courant à un ensemble de données et
- l'unité esclave est munie d'une mémoire de protocole dans laquelle sont mémorisés pour l'accès interrompu à l'ensemble de données le numéro de l'ensemble de données et la zone d'adresse en mémoire des données encore à transmettre de l'ensemble de données.

8. Unité esclave, qui peut être reliée par l'intermédiaire d'un bus à au moins une unité maîtresse, caractérisée par le fait que
- l'unité esclave comporte une zone de protocole (1, 2) dans laquelle il peut être écrit pour un protocole de communication et par l'intermédiaire de laquelle l'unité maîtresse indique à l'unité esclave un accès imminent en mémoire, et
- la zone de protocole (1, 2) comprend une cellule de réponse (2) qui est munie d'une caractérisation fixe que lit l'unité maîtresse et qui fait que l'unité esclave refuse à l'unité maîtresse un accès en lecture et/ou en écriture.
